(19) Europäisches Patentamt

European Patent Office

Office européen des brevets

(11) **EP 0 513 449 B1**

(12) **EUROPEAN PATENT SPECIFICATION**

(45) Date of publication and mention
of the grant of the patent:
**13.08.1997 Bulletin 1997/33**

(51) Int. Cl.⁶: **A47G 27/02**, D06N 7/00, B29D 31/00

(21) Application number: **91304361.8**

(22) Date of filing: **15.05.1991**

(54) **Method of forming a floor mat**

Herstellungsverfahren einer Bodenmatte

Procédé de fabrication d'un tapis de sol

(84) Designated Contracting States:
**DK GB**

(43) Date of publication of application:
**19.11.1992 Bulletin 1992/47**

(73) Proprietor: **DUSKIN COMPANY LIMITED**
**Suita-shi, Osaka-fu (JP)**

(72) Inventors:
• **Nagahama, Yuji**
**c/o Duskin Co., Ltd.**
**Osaka-fu (JP)**
• **Miyake, Tetsuo**
**Mie-ken (JP)**

(74) Representative: **Senior, Alan Murray et al**
**J.A. KEMP & CO.,**
**14 South Square,**
**Gray's Inn**
**London WC1R 5LX (GB)**

(56) References cited:
DE-A- 3 702 280           GB-A- 264 362
GB-A- 402 269            GB-A- 744 165
GB-A- 768 001            GB-A- 923 142
JP-A-59 001 237          US-A- 2 918 397
US-A- 3 811 922

• PATENT ABSTRACTS OF JAPAN vol. 10, no. 120 (C-343)(2177) 6 May 1986 & JP-A-60 246 880 ( SUMINOE ORIMONO K.K. ) 6 December 1985

Printed by Rank Xerox (UK) Business Services
2.14.12/3.4

**Description**

This invention relates to a method for manufacturing a floor mat, particularly used in the cleaning of the soles of shoes when laid in an entrance or an inlet of housings and shops.

Many floor mats consist of a base cloth, piles tufted thereto and a back of synthetic rubber fixing the tufted system. They are used as laid on an entrance and exit to prevent intrusion of dust to indoors from outside in shops, housings and offices.

GB-A-744165 considers the problem that when a rubber material is foamed and vulcanized, while the rubber is still hot, there is an immediate and spontaneous over-expansion of the rubber, with resulting stresses and loss of gas, and that upon cooling, the rubber will be subject to shrinkage. To overcome this, it proposes foaming and partially curing rubber in a mould, then allowing the generated gas to expand the mould to a limited extent and completely expand the rubbery material and finally allowing the rubbery material to cool whilst confined in the mould.

Backings of synthetic rubbers are generally integrated by laying tufted piles and an unvulcanized rubber sheet and heating them under pressure.

When a mat is made by such a method, the sizes of the original portion of the mat and a rubber portion are fixed when they are heated under pressure, and after cooling, at ordinary temperatures of use, the product gives rise to distortion from differences in the rate of thermal expansion between the rubber and the fibre, or it remains as an internal stress. This difference appears as a dimensional change such as waving or curling.

In addition to the dimensional difference arising at the time of manufacture, a strain from differential shrinkage of the rubber as compared with the fibre, of the fibres owing to repeated use (due to the repetition of washing and drying) will occur. A strain is then complexly distributed over the whole mat, and finally defects such as waving and curling are developed. Since these shorten the life of the rental mat, this poses a great problem.

GB-A-923142, discloses a floor covering having a loop pile fabric bonded to a foam rubber backing. The floor covering is formed by heating the rubber such that it is vulcanized and expands by foaming to a desired thickness and bonds with the fabric.

JP-A-59001237, on which the precharacterizing portion of appended claim 1 is based, discloses a rubber backed carpet which is heated to vulcanize and bond the rubber backing to the carpet material. The process occurs under pressure so that the rubber better impregnates and bonds the carpet material.

It is an aim of this invention to provide an improved mat by reducing the dimensional differences between the fibres and the rubber which occurs on heating under pressure at the time of producing these mats, preventing the occurrence of waving and curling owing to the repeated use of the fibres, and to reduce the weight of the mat which becomes a problem in such mats.

According to the present invention, there is provided a method of forming a floor mat, including a tufted mat formed of a mat pile tufted on a base cloth, the method comprising:

heating an unvulcanized rubber sheet and the tufted mat under pressure, thereby to bond the rubber sheet onto a back surface of the base cloth and to vulcanize the rubber sheet;
characterised in that
the rubber sheet is foamed by said heating and has an expansion factor of 1.2 to 3, the unvulcanized rubber sheet and the tufted mat being heated under a pressure chosen such that, upon cooling and removing the pressure, unbalanced shrinkage of the mat is prevented by an increase in the volume of cells in the rubber sheet corresponding to thermal shrinkage of the rubber.

Preferably the floor mat further comprises a skin layer with a thickness of 0.1 to 1.0 mm.

With the present invention, the stability of the mat and its ability to prevent turning over can be increased by disposing a frame-like solid rubber in the marginal edge of the foamed rubber sheet.

The invention will be further understood from the following description, when taken together with the attached drawings, which are given by way of example only, and in which:-

Figure 1 shows dimensional changes in each step of the integrated mat;
Figure 2 shows the shrinkage in a recycle step;
Figure 3 is a drawing showing the process of reducing the mat of the invention;
Figure 4 is a section showing an example of the invention;
Figure 5 is a section showing another example; and
Figure 6 is a drawing for illustrating the method of pressing of the mat in an example.

The floor mat of the invention comprises, as in a known mat, a base cloth, a mat pile tufted to the back surface (non-pile surface) of the base cloth, and is characterized in that an unvulcanized rubber sheet of low expansibility and a tufted mat are integrated under heat and pressure and this rubber sheet is vulcanized and foamed, and that this rubber sheet

2

is expanded at a low expansibility of 1.2 to 3 times.

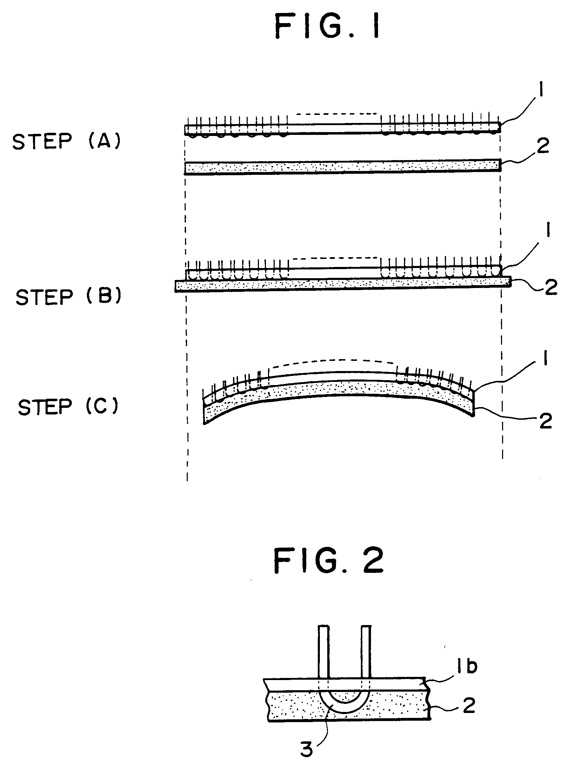

In Figure 1 illustrating dimensional changes in various steps in a conventional step of forming an integrated mat, an original cloth 1 mode by tufting piles to the base cloth is superimposed on a rubber sheet 2 in step (A). The superimposed materials are heated under pressure in step (B) to integrate them. At the time of pressing, the rubber sheet is thermally expanded to adhere and fix the fibers and the rubber. In step (C) the product is cooled. The difference between thermal shrinkage of the rubber and the thermal shrinkage of the original cloth causes curling waving and internal stress in the mat (initial state). Thus by making the dimension at the time of pressing as a standard, the difference in the amount of shrinkage which causes waving is expressed by the formula:

Difference of shrinkage (S) = (Thermal Shrinking length of the rubber)-(thermal shrinkage length of the woven cloth).

By thereafter repeatedly using the rental mat, shrinkage of the fibers is developed by recycling steps such as washing and drying. Since the shrinkage of the rubber is less than that of the fibers in such steps, the difference further increases.

Figure 2 shows the shrinkage of the recycling step; the two parts act as shown by (1) the base cloth 1b and (2) the rubber 2 + pile backstitch 3. The product is considered to act like a bimetal, and the backstitch shrinks in the length of the fibers. As a result, the shrinkage of the backstitch of the pile by repeated use is added to the heat shrinkage at the time of the mat production, and the relative difference of the base close 1b becomes large.

Thus, after the recycling step, the difference (R) of the amount of shrinkage is expressed by

R = S - {the shrinkage length of the base cloth - (the shrinkage length of the rubber after washing - the shrinkage length of the pile stitch)}.

In a conventional integrated mat, waving and curling occur by these two factors, and it is therefore difficult to use it as a rental mat stably for a long period of time.

With the present invention, the shrinkage behaviors of the mat-constituting materials are considered and a foamed structure is introduced into the rubber portion by heating under pressure at the time of integration of the mat. Thus, shrinking at the time of washing after heating under heat and pressure and shrinking of the mat by drying can be successfully moderated. This leads to a rubber-containing mat with reduced waving. As a subsidiary effect, when the rubber sheets of the same thickness are used, a relatively lighter product as compared with a solid rubber type can be obtained. As a rental mat, the cleaning cost can be decreased. The reasons therefor will be explained.

As shown by the Law of Boyle and Charles, a closed gas generally is "expanded in volume by heating" and "its volume decreases by pressure." These varying amount are shown by the following formula when a gas is regarded as ideal:

$$PV = nRT \text{ or } \frac{P_1 V_1}{T_1} = \frac{P_2 V_2}{T_2}$$

wherein P, $P_1$ and $P_2$ are the pressure(s) of the gas, V, $V_1$, and $V_2$ are the Volume(s) of the gas, T, $T_1$ and $T_2$ are the temperature(s) (K) of the gas, R is a constant, and n is the mole number of the gas, holds good.

Thus, the volume of the air cells in the rubber sheet varies depending upon the temperature and pressure as shown by the above formula. On the other hand, in the rubber sheet and fibers, there is a volume change (dimensional change) by heating as stated above. Polyester fibers, nylon fibers, acrylic fibers, vinylon fibers and natural fibers such as cotton have an inherent linear expansion. They are however smaller than that of rubber (in the case of NBR, it is 13 - 20 x $10^{-5}$ °$C^{-1}$).

In the foamed rubber-containing mat of this invention, the pressure is, as a result, reduced to normal pressure in adhering rubber fibers. By utilizing the pressure difference, the air cells in the rubber can be increased in volume and the imbalanced shrinkage of the mat as a whole can be prevented. As a result, waving can be prevented. In detail, as compared with the thermal shrinkage of the rubber, the thermal shrinkage of the air cells and shrinkage of the fibers by washing, the expansion of air cells having a large volume change is utilized and the imbalance of shrinkage can be reduced.

Generally, as compared with a general rubber backing mat, by carrying out a foaming reaction simultaneously with the thermal expansion of the rubber, the gas is maintained in the rubber in a closed state during heating under pressure to fix the rubber to the fibers. Thereafter, when the temperature is returned to normal temperature and the pressure to normal pressure, the rubber portion is expanded (the expansion of the gas) according to the pressure difference to give a mat with the prevention of a plane curling in use.

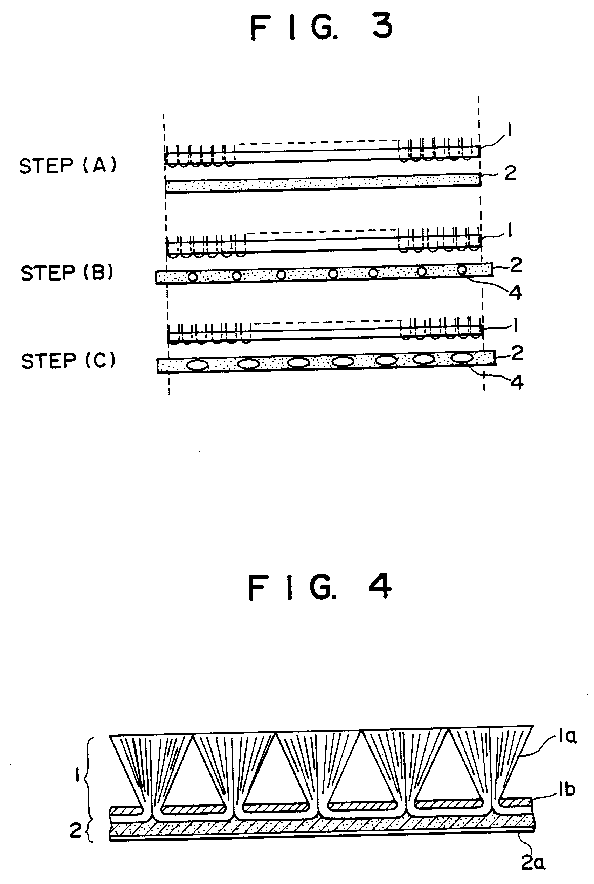

Figure 3 shows the production of the mat of this invention in which in step (A) an original cloth 1 obtained by tufting a pile to a base cloth is superimposed on a low foamable rubber sheet 2 containing a foaming agent and a vulcanizer, and in the step (B) they are overlaid and heated under pressure to perform integration by bonding them and to carry out vulcanization and foaming of the rubber sheet. At this time, air cells 4 are formed in the rubber sheet 2. Finally, in the step (C), the backing mat is cooled. By performing the thermal shrinkage (the thermal shrinkage of the rubbers volume expansion by the reduction of the pressure) between the step (B) and step (C) an ordinary curling of a rubber-containing mat can be prevented.

The foamed state may be continuous cell forming or single cell forming open or closed cell. The method of production for preventing curling may be arbitrarily selected from the pressurization, the cell content (cell forming factor) and the linear expansion of the rubber.

The floor mat of this invention, as shown in Figure 2, is obtained by backing a foamed rubber sheet 2 to the back surface of a pile carpet 1, and is characterized in that the foamed rubber sheet 2 has a foaming factor of 1.2 to 3, and the thickness of the skin layer 2a is 0.1 to 1.0 mm. In the drawing, 1a represents a cut pile, and 1b is a base cloth formed of fibers and a non-woven cloth.

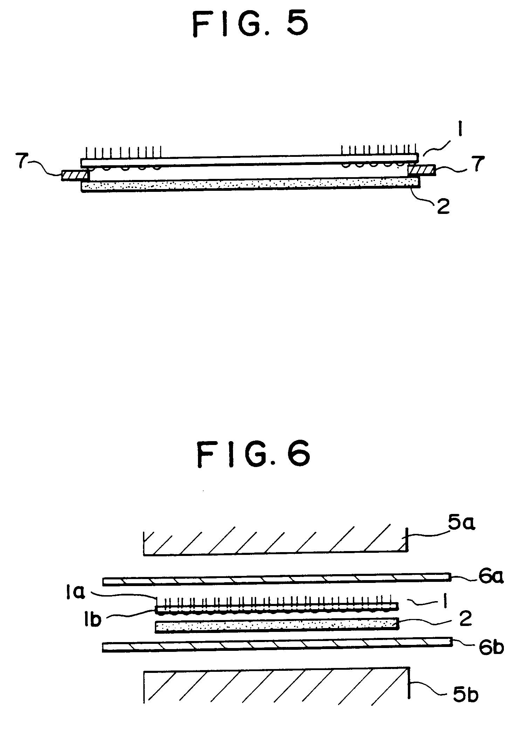

In the present invention, as shown in Figure 5, by disposing a frame-like solid rubber 7 in the outer circumferential portion of the foamed rubber sheet 2, only the outer circumferential portion can be shrunk as compared with a central portion and the weight of the circumferential portion can be increased. Thus, it is possible to increase the stability of the mat and its ability to prevent turning over.

The foamed rubber sheet may be natural or synthetic rubber, but nitrile-butadiene rubber (NBR) is preferred. NBR has excellent mechanical strength, thermal resistance, oil resistance and weatherability. Because of its strong hydrogen bond by the nitrile group, it has great maintenance of cells, and even in a recycle step of drying and washing, the foamed structure may be maintained stably. This leads to the advance that an excellent waving preventive effect and fitness to the floor can be obtained.

The preferred thickness of the foamed rubber sheet is 0.5 to 2.0 mm. The floor mat of this invention can be produced by forming a sheet from a rubber composition of the natural or synthetic rubber including a foaming agent, overlaying a pile carpet on this sheet and interposing them between hot plates, heating them under a pressure of 3 to 5 kg/cm$^2$ and at 150 to 170°C for 10 to 20 minutes, and performing vulcanization and foaming. The foaming agent used at this time are preferably low odorizing such as azodicarboamide, p-toluene sulfonyl hydrazide. The amount of the blowing agent is preferably 0.1 to 5.0 parts by weight. The back surface of the pile carpet may be coated with an ethylene vinyl copolymer to enhance its adhesion to the foamed rubber sheet. At the time of interposing the rubber sheet and the pile carpet with the hot plates, a fibrous sheet may be interposed between the hot plates.

Example 1

By using a rubber composition having the composition of Table 1, an unvulcanized rubber sheet was molded.

Table 1

| material | parts by weight |
| --- | --- |
| Rubber (NBR) | 100 |
| Zinc oxide | 5 |
| Stearic acid | 1 |
| Dioctyl phthalate | 15 |
| SRF carbon | 60 |
| Wax | 1 |
| Sulfur | 1.5 |
| Thiazole-type vulcanization acceleration promoter | 1.5 |
| Thiura-type acceleration promotor | 0.4 |
| Foaming agent | 1.5 |
| (The foaming agent was a mixture of azo carbonamide and dinitrosopentamethyltetramine, tradename "Ecceler Q25") | |

As shown in Figure 6, a nylon bulky textured yarn was tufted to a base cloth 1b of a polyester non-woven fabric to form a cut pile 1a having a height of 10 mm. On the back surface of the base cloth 1b, an ethylene vinyl acetate copolymer was coated to prepare a pile carpet 1. This pile carpet 1 was placed on the unvulcanized rubber sheet 2. The material was interposed between hot plates 5a and 5b through embossing fibrous sheets 6a and 6b and vulcanized under a pressure of 4 kg/cm$^2$ at 160°C for 15 minutes to obtain the floor mat of the invention. The foamed rubber sheet 2 of the floor mat had an expansion factor of 1.7 times. The skin layer 2a had a thickness of 0.2 mm and a total thickness of 1.7 mm. The resulting mat had a total weight of 2360 g/m$^2$ and had good fitness. When this mat was subjected to washing tests, no change was seen after repeating washing 20 times. As compared with a conventional product containing a solid rubber, the weight was about 25% lighter. The product had increased durability and a washing life increased at least 7 times as compared with a conventional product having foamed vinyl chloride sheet.

Example 2

Three unvulcanized rubber sheets having a thickness of 1.0 mm and a foaming factor of 0 %, 50 % (containing 1.5 parts of the blowing agent) and 100 % (containing 3.0 parts) were prepared from the composition 1. These unvulcanized rubber sheets were vulcanised by using a mold under a pressure of 3 kg/cm$^2$ at 160°C for 30 minutes. The sheets were cooled to 20°C, and their dimensions were measured. The results are shown in Table 2.

Table 2

| Expansion factor | Unvulcanized | After vulcanization |
|---|---|---|
| 0 % | 100 cm | 97.4 cm |
| 50 % | 100 cm | 111.1 cm |
| 100 % | 100 cm | 117.9 cm |

The rubber sheets changed dimensionally almost regularly to the amount of air.

Example 3

Three rubber sheets A, B and C and the following original mat were vulcanized by using hot plates 5a and 5b as shown in Figure 6 through fibrous sheets 6a and 6b under the conditions shown in Table 3 to prepare rubber sheet-containing mats Ⓐ, Ⓑ and Ⓒ.

Mat original

Pile     nylon-6, 1300 d/2 ply
         stitch 6, pile height 9 mm
         Gage 5/32
         Unit weight 880 g/m$^2$

Base cloth Polyester non-woven fabric 100 g/m$^2$
Size 1430 mm x 880 mm

(Rubber sheet A)

Rubber composition:   the rubber described in Table 1 was used
Expansion factor:     50 % (1.5 times)
Sheet thickness:      Before foaming 1 mm,
                      After foaming 1.5 mm
Weight:               1230 g/m$^2$
Vulcanization:        150°C, 20 minutes
Pressurizing method:  By the method shown in Figure 6, a presurizing method is carried out under 2 kg/cm$^2$
Size:                 1450 m x 900 mm

(Rubber sheet B)

The rubber sheet B, as shown in Figure 5, was composed of a central rubber sheet 2 and a frame-like peripheral rubber sheet 7. The central portion and the outer peripheral portion were superimposed by 20 mm. The peripheral rubber sheet was protruded outwardly 10 cm from the central portion.

Rubber composition: The rubber shown in Table 1 at the central portion and the peripheral portion (the peripheral portion did not contain a blowing agent)

Expansion ratio; the central portion 100 % (2 times), the peripheral portion 0 % (not foamed) Sheet thickness: the Central portion 1.0 mm, before foaming 1.0 mm, after foaming 2.0 mm the peripheral portion 2.0 mm

Weight:      The central portion 1230 g/ m$^2$, the peripheral portion 2475 g/m$^2$

Vulcanization condition: 160°C, 30 minutes
Pressurization method: By the method shown in Figure 6, pressurization was carried out under 3 kg/cm$^2$.
Size: 1450 mm x 900 mm

(Rubber sheet C)

Rubber composition:      The rubber shown in Table 1 was used (but not containing a blowing agent)
Expansion factor:      0 %
Sheet thickness:      1.5 mm
Weight:      1845 g/m$^2$
Vulcanization conditions:      160°C, 20 minutes Figure 6, the pressuriation was carried out under 3 kg/cm$^2$
Size:      Pressurization: By the method 1450 mm x 900 mm

The mats produced under the above conditions were laid for 3 days in a place where the pedestrians were 3000 persons/day. The integrated mats were washed and regenerated in a customary manner.

After repeating this operation 40 times, the number of waving and the height were measured. At the same time, the poor parts in outer appearance, the breakage of the selvage, and wear were ascertained. The results are shown in Table 4.

Table 4

| Waving | Mat A | Mat B | Mat C |
|---|---|---|---|
| Washing 20 times | 0 | 0 | 6mmx4 |
| | | | 10mmx2 |
| Washing 40 times | 5mmx2 | 0 | 10mmx6 |
| | | | 12mmx3 |
| Breakage of the selvage and wear | no problem | no problem | no problem |
| Mat weight | 2880 g | 3120 g | 3640 g |
| Lighter rate as compared with C | 21 % | 14 % | 0 |

In comparison with Ⓒ, both Ⓐ and Ⓑ had less waving and Ⓑ showed no waving. In the mat Ⓒ waving occurred many times, and during passage, the mat caught the feet and caused problems. This was very unsightly.

Defects such as wearing were not seen in the rubber portion of the back surface. No problem was noted in the physical properties of the foamed rubber sheet.

As can be seen from Examples, in the present invention, the shrinkage of the mats by shrinkage, washing and drying after heating und pressure can be reduced, and waving could be effectively prevented as compared with a conventional mat. Heat resistance was elevated and the washability was greatly increased. The life of such a mat is therefore prolonged. Furthermore, fitness to a floor surface was excellent. As compared with a conventional solid rubber sheet backed, the total mat weight was very light. Thus, the mat of the invention was easy to handle. As a rental mat, the cleaning cost could be reduced.

**Claims**

1.   A method of forming a floor mat, including a tufted mat (1a) formed of a mat pile tufted on a base cloth (1b), the method comprising:

heating an unvulcanized rubber sheet (2) and the tufted mat (1) under pressure, thereby to bond the rubber sheet (2) onto a back surface of the base cloth (1b) and to vulcanize the rubber sheet (2); characterised in that the rubber sheet (2) is foamed by said heating and has an expansion factor of 1.2 to 3, the unvulcanized rubber sheet (2) and the tufted mat (1) being heated under a pressure chosen such that, upon cooling and removing the pressure, unbalanced shrinkage of the mat is prevented by an increase in the volume of cells in the rubber sheet (2) corresponding to thermal shrinkage of the rubber.

2. A method according to claim 1 wherein the rubber sheet (2) comprises a central portion of a low expansion rubber (2) and a peripheral frame portion (7) of solid rubber.

3. A method according to claim 1 or 2 wherein the rubber sheet (2) is a nitrile-butadiene rubber (NBR).

4. A method according to claim 1, 2 or 3, further comprising a skin layer (2a) with a thickness of 0.1 to 1.0 mm.

**Patentansprüche**

1. Verfahren zum Herstellen einer Bodenmatte, die eine Nadelflor-Matte (1a) umfaßt, die aus einem auf einem Grundtextilgewebe (1b) aufgetufteten Mattenflor gebildet ist, wobei das Verfahren folgendes umfaßt:

Erhitzen einer Rohgummiplatte (2) und der getufteten Matte (1) unter Druck, um dadurch einen Verbund zwischen der Gummiplatte (2) und einer Rückseite des Grundtextilgewebes (1b) zu schaffen und um die Gummiplatte (2) zu vulkanisieren, dadurch gekennzeichnet, daß die Gummiplatte (2) durch das Erhitzen aufgeschäumt wird und einen Ausdehnungskoeffizienten von 1,2 bis 3 besitzt, wobei die Rohgummiplatte (2) und die getuftete Matte (1) bei einem Druck erwärmt werden, der so ausgewählt wird, daß beim Abkühlen und bei der Wegnahme des Drucks eine unausgeglichene Schrumpfung der Matte durch einen Anstieg des Volumens der Zellen in der Gummiplatte (2), der der Wärmeschrumpfung des Gummis entspricht, verhindert wird.

2. Verfahren nach Anspruch 1, bei dem die Gummiplatte (2) einen mittleren Abschnitt aus einem Gummi (2) mit einem niedrigen thermischen Ausdehnungskoeffizienten und einen umfangsseitigen Rahmenabschnitt (7) aus einem Vollgummi umfaßt.

3. Verfahren nach Anspruch 1 oder 2, bei dem die Gummiplatte (2) ein Nitril-Butadien-Kautschuk (NBR) ist.

4. Verfahren nach Anspruch 1, 2 oder 3, das außerdem eine Außenhautschicht (2a) mit einer Dicke von 0,1 bis 1,0 mm umfaßt.

**Revendications**

1. Procédé pour fabriquer un tapis de sol, comprenant une nappe tufetée (1a) formé d'une nappe de poils tufetée sur un tissu de base (1b), le procédé consistant à :

chauffer une feuille de caoutchouc non vulcanisé (2) et la nappe tufetée (1) sous pression de manière à réunir la feuille de caoutchouc (2) à une surface arrière du tissu de base (1b) et vulcaniser la feuille de caoutchouc (2);
caractérisé en ce que
la feuille de caoutchouc (2) est amenée à l'état de mousse sous l'effet dudit chauffage et possède un facteur d'expansion de 1,2 à 3, la feuille de caoutchouc non vulcanisé (2) et la nappe tufetée (1) étant chauffées sous une pression choisie de telle sorte que, lors du refroidissement et de la suppression de la pression, une contraction non équilibrée de la nappe est empêchée par un accroissement du volume de cellules dans la feuille de caoutchouc (2), correspondant à la contraction thermique du caoutchouc.

2. Procédé selon la revendication 1, dans lequel la feuille de caoutchouc (2) comprend une partie centrale formée d'un caoutchouc à faible expansion (2), et une partie formant cadre périphérique (7) formée de caoutchouc plein.

3. Procédé selon la revendication 1 ou 2, dans lequel la feuille de caoutchouc (2) est formée de caoutchouc nitrile - butadiène (NBR).

4. Procédé selon la revendication 1, 2 ou 3, comprenant en outre une couche formant peau (2a) ayant une épaisseur comprise entre 0,1 et 1,0 mm.

# FIG. 1

STEP (A)

STEP (B)

STEP (C)

# FIG. 2

# F I G. 3

STEP (A)

STEP (B)

STEP (C)

# F I G. 4

# FIG. 5

# FIG. 6